# EUROPÄISCHE PATENTANMELDUNG

(11) **EP 3 236 511 A1**
(43) Veröffentlichungstag der Anmeldung: **25.10.2017**
(21) Anmeldenummer: 17152753.4
(22) Anmeldetag: 24.01.2017
(51) Int. Cl.: H01M 2/10, H01M 10/04

(54) **VERFAHREN UND VORRICHTUNG ZUM ENTNEHMEN VON BATTERIEZELLEN AUS EINER RECHTECKIGEN UMVERPACKUNG**

(30) Priorität: 22.04.2016 DE 102016107494
(71) Anmelder: Manz AG, 72768 Reutlingen (DE)
(72) Erfinder: FREUNDT, Dr. Martin, 73732 Esslingen (DE); MAURER, Martin, 72827 Wannweil (DE); HEIM, Alexander, 72770 Reutlingen (DE)
(74) Vertreter: Kohler Schmid Möbus Patentanwälte

(57) **Zusammenfassung**

Ein Verfahren und eine Vorrichtung (10) zum schnellen Entnehmen von Batteriezellen (13) aus einer rechteckigen Umverpackung (12) und Ablegen auf einem Zielträger (15), wobei mindestens zwei Greifer (17, 18) an einer gemeinsamen Achse (19) drehbar angeordnet sind und im Wechsel Zeilen (14) von Batteriezellen (13) aus der Umverpackung (12) entnehmen und auf dem Zielträger (15) absetzen.

## Beschreibung

Die Erfindung betrifft ein Verfahren zum Entnehmen von Batteriezellen aus einer rechteckigen Umverpackung und Ablegen auf einem Zielträger sowie eine Vorrichtung zur Durchführung des Verfahrens.

Zur Herstellung von Batteriepacks aus einer Vielzahl von gleichartigen Batteriezellen müssen diese aus einer Umverpackung entnommen und für die Weiterverarbeitung bereitgestellt werden, indem sie auf einer Zwischenablage oder auch direkt in einem Gehäuse des Batteriepacks platziert werden. Häufig muss dazu auch der gegenseitige Abstand der Batteriezellen zumindest in einer Dimension gegenüber dem Abstand in der Umverpackung geändert werden.

Diese Aufgabe wird bisher in der Regel dadurch gelöst, dass die Batteriezellen sequentiell durch einen oder mehrere Greifer entnommen und auf dem Zielträger an der gewünschten Stelle abgesetzt werden. Dieses Verfahren ist jedoch relativ langsam. Außerdem erfassen die Greifer die Zellen an der oberen Stirnseite, an der üblicherweise auch die Kontakte der Zellen sitzen. Es können daher keine Saugeinrichtungen an den Greifern eingesetzt werden, die rasch wirksam sind und eine hohe Haltekraft erzeugen und damit schnelle Bewegungen erlauben.

Der vorliegenden Erfindung liegt daher die Aufgabe zugrunde, das Entpacken und Bereitstellen einer Vielzahl von Batteriezellen auf eine schnellere und wirtschaftlichere Weise als bisher zu ermöglichen.

Die Aufgabe wird gelöst durch ein Verfahren zum Entnehmen von Batteriezellen aus einer rechteckigen Umverpackung und Ablegen auf einem Zielträger, das gekennzeichnet ist durch die Schritte:
a. Einführen eines Greifers mit je einem Greifelement pro Zelle zwischen die erste Zeile von Batteriezellen und die Wand der Umverpackung oder zwischen zwei Zeilen von Batteriezellen;
b. seitliches Ergreifen der Batteriezellen mit den Greifelementen;
c. Anheben des Greifers mit den Batteriezellen über die Umverpackung und Drehen des Greifers um eine vertikale Achse um mindestens 90° oder Durchführen einer translatorischen Bewegung mit dem Greifer;
d. Absenken des Greifers und Absetzen der Zeile von Batteriezellen auf dem Zielträger;
e. Einführen eines weiteren Greifers mit je einem Greifelement je Batteriezelle in die Umverpackung neben der nächsten Zeile von Batteriezellen;
f. seitliches Ergreifen der Batteriezellen mit den Greifelementen;
g. Anheben des weiteren Greifers mit den Batteriezellen über die Umverpackung und Drehen des Greifers um eine vertikale Achse um mindestens 90° oder Durchführen einer translatorischen Bewegung mit dem Greifer, während der erste Greifer angehoben und um die vertikale Achse vom Zielträger weggeschwenkt oder durch eine translatorische Bewegung von diesem wegbewegt wird;
h. Absenken des weiteren Greifers und Absetzen der Zeile von Batteriezellen auf dem Zielträger im gewünschten Abstand zur ersten Zeile;
i. Wiederholung der Schritte e. bis h. im Wechsel durch die Greifer, bis alle oder die gewünschte Anzahl von Zeilen von Batteriezellen aus der Umverpackung entnommen und auf dem Zielträger abgesetzt wurden.

Nach dem erfindungsgemäßen Verfahren werden mit zwei oder mehr Greifern vorzugsweise jeweils ganze Zeilen von Batteriezellen aus der Umverpackung entnommen und auf dem Zielträger abgesetzt. Dabei sind die Wege, die mit den Greifern zurückgelegt werden, sehr kurz. Die Greifer erreichen ihre Zellenaufnahme- und Zellenabgabeposition zumindest in erster Linie durch Drehbewegungen, die sehr schnell durchgeführt werden können. Die Bewegungen der Greifer können dabei auch überlappend durchgeführt werden, wodurch die Zeit zum Entpacken und Bereitstellen der Batteriezellen weiter verkürzt werden kann.

Dabei ist es vorteilhaft, wenn die Greifer um dieselbe vertikale Achse verschwenkt werden. Die Synchronisierung der Bewegung der Greifer wird dadurch erleichtert. Auch der konstruktive Aufwand zur Durchführung des Verfahrens wird auf diese Weise reduziert.

Weitere Vorteile ergeben sich, wenn der gegenseitige Abstand der Zeilen von Batteriezellen auf dem Zielträger durch eine horizontale Translationsbewegung des Zielträgers senkrecht zur Batteriezeilenlängsrichtung eingestellt wird. Die Greifer müssen dann lediglich Drehbewegungen und vertikale Hubbewegungen ausführen, jedoch keine horizontalen Bewegungen, was den Prozess weiter beschleunigt. Dennoch können die Zeilenabstände der Batteriezellenzeilen gegenüber ihrem Abstand in der Umverpackung auf einfache Weise geändert werden.

Bei einer bevorzugten Variante des Verfahrens werden zur Durchführung des Verfahrens zwei Greifer eingesetzt, die an einer gemeinsamen vertikalen Achse um 180° voneinander beabstandet angeordnet und gemeinsam um diese Achse drehbar und unabhängig voneinander in vertikaler Richtung verschiebbar sind und die die Schritte e. bis h. im Wechsel durchführen, wobei sie im Schritt g. jeweils um 180° um die vertikale Achse gedreht werden. Während die Linearbewegungen und die Aktivierung und Deaktivierung der Greifelemente der Greifer unabhängig voneinander erfolgen, werden sie gemeinsam um die Drehachse verschwenkt.

Sollen noch höhere Geschwindigkeiten erreicht werden, können zur Durchführung des Verfahrens vier Greifer eingesetzt werden, die an einer gemeinsamen vertikalen Achse um 90° voneinander beabstandet angeordnet und gemeinsam um diese Achse drehbar und unabhängig voneinander in vertikaler Richtung verschiebbar sind und die die Schritte e. bis h. im Wechsel durchführen, wobei sie in Schritt g. jeweils um 90° um die vertikale Achse gedreht werden.

Müssen die gegenseitigen Abstände der Batteriezellen auf dem Zielträger auch innerhalb einer Zeile geändert werden, so kann in Schritt g. außerdem der gegenseitige Abstand der die Batteriezellen haltenden Greifelemente des Greifers verändert werden. Ebenso wie der Abstand zwischen den Zeilen der Batteriezellen auf dem Zielträger kann dabei auch der gegenseitige Abstand der Zellen innerhalb einer Zeile gegenüber den jeweiligen Abständen in der Umverpackung entweder vergrößert oder verkleinert werden.

Die Erfindung betrifft außerdem eine Vorrichtung zur Durchführung eines erfindungsgemäßen Verfahrens, die dadurch gekennzeichnet ist, dass sie zwei um 180° voneinander beabstandet oder vier um 90° voneinander beabstandet an einer gemeinsamen vertikalen Drehachse angeordnete, schwertförmige Greifer aufweist, die mit einer Vielzahl von Greifelementen zum seitlichen Ergreifen von Batteriezellen bestückt sind und die in vertikaler Richtung unabhängig voneinander bewegbar sind. Die Anzahl der Greifelemente entspricht zweckmäßigerweise der Anzahl an Batteriezellen einer Zeile in einer Standard-Umverpackung für solche Zellen, sodass eine Zeile von Batteriezellen mit den Greifern in einem Arbeitsgang komplett entnommen werden kann.

Um den gegenseitigen Abstand der Zeilen von Batteriezellen auf einem Zielträger auf konstruktiv einfache und schnelle Weise einstellen und auch gegenüber diesem Abstand in der Umverpackung ändern zu können, kann die Vorrichtung vorzugsweise eine Antriebsvorrichtung für einen Zielträger zur Aufnahme der Batteriezellen aufweisen, wobei mit Hilfe der Antriebsvorrichtung der Zielträger horizontal und senkrecht zur Ausrichtung der Zeilen von Batteriezellen auf dem Zielträger verschiebbar ist.

In gleicher Weise ist es vorteilhaft, wenn die Vorrichtung eine Antriebsvorrichtung für eine Umverpackung von Batteriezellen aufweist, wobei mit Hilfe der Antriebsvorrichtung die Umverpackung horizontal und senkrecht zur Ausrichtung der Batteriezeilen in der Umverpackung verschiebbar ist. Werden die notwendigen horizontalen Bewegungen zum sequentiellen Entnehmen von Batteriezellenzeilen aus einer Umverpackung und Ablegen der Zeilen nebeneinander auf einem Zielträger von Antriebsvorrichtungen des Zielträgers und der Umverpackung vorgenommen, müssen die Greifer nur drehend angetrieben und in vertikaler Richtung bewegt werden. Die Bewegungen der Greifer und der Umverpackung und des Zielträgers können dabei auch zumindest teilweise gleichzeitig erfolgen, sodass die Prozesszeiten weiter verkürzt werden können.

Soll außerdem der gegenseitige Abstand der Batteriezellen innerhalb einer Zeile gegenüber dem Abstand in der Umverpackung geändert werden, so können dazu die Greifelemente in ihrem gegenseitigen Abstand verstellbar an den Greifern angeordnet sein. Nach dem Entnehmen einer Zeile von Zellen aus der Umverpackung können somit während der Drehbewegung des Greifers zum Zielträger hin die Batteriezellen im Greifer auf den gewünschten gegenseitigen Abstand gebracht und dann auf dem Zielträger abgesetzt werden.

Zur Verstellung des gegenseitigen Abstands der Greifelemente gibt es unterschiedliche Möglichkeiten. Bei einer ersten Ausführungsform der Vorrichtung kann der gegenseitige Abstand der Greifelemente über eine Kulissenführung oder über Steuerkurven während der Schwenkbewegung der Greifer um die Drehachse und/oder während der Vertikalbewegung der Greifer verstellbar sein.

Alternativ können zwischen den Greifelementen elastische Elemente angeordnet sein, die beim Ergreifen der Batteriezellen entsprechend des gegenseitigen Abstands der Zellen in der Umverpackung vorgespannt sind und deren Federkonstante derart bemessen ist, dass sich nach Freigabe der Vorspannung nach dem Ergreifen der Batteriezellen der gewünschte gegenseitige Abstand der Batteriezellen auf dem Zielträger ergibt. Ist die Federkonstante einstellbar, so kann der Greifer auf verschiedene, gewünschte Zielabstände der Batteriezellen eingestellt werden.

Für die Ausgestaltung der Greifelemente sind verschiedene Lösungen denkbar. Bevorzugt weisen die Greifelemente jedoch Saugeinrichtungen auf und/oder sind magnetisch wirkend. Hierdurch können hohe Haltekräfte erzeugt werden, die wiederum hohe Bewegungsgeschwindigkeiten der Greifer erlauben. Außerdem kann jedes der Greifelemente einzeln ansteuerbar sein.

Im Folgenden werden anhand einer schematischen Zeichnung das Prinzip eines erfindungsgemäßen Verfahrens sowie Ausführungsbeispiele erfindungsgemäßer Vorrichtungen näher erläutert.

Es zeigen:
- Fig. 1: eine schematische Draufsicht auf eine erste erfindungsgemäße Vorrichtung;
- Fig. 2: eine schematische Draufsicht auf eine zweite erfindungsgemäße Vorrichtung.

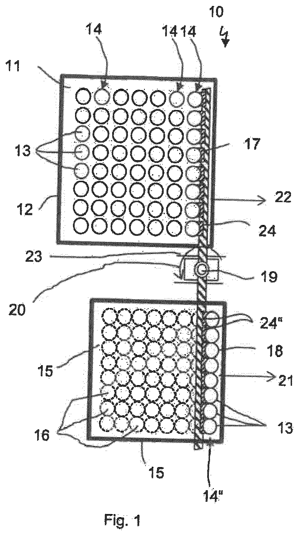

Die Vorrichtung 10 gemäß Fig. 1 weist einen Träger 11 für eine Umverpackung 12 für eine Vielzahl von Batteriezellen 13 auf, die in mehreren parallelen Zeilen 14 in der Umverpackung 12 angeordnet sind.
Weiter ist ein Zielträger 15 vorgesehen, der mit Aufnahmen 16 für die Batteriezellen 13 versehen ist, wobei in Fig. 1 bereits eine Zeile 14' von Batteriezellen 13 auf dem Zielträger 15 abgesetzt wurde.

Zum Entnehmen der Zeilen 14 aus der Umverpackung und Absetzen als Zeilen 14' auf dem Zielträger 15 sind zwei schwertförmige Greifer 17, 18 vorgesehen, die jeweils mit einer Vielzahl von hier nicht näher dargestellten Greifelementen zum seitlichen Ergreifen der Batteriezellen 13 versehen sind. Die Greifer sind an einer gemeinsamen, vertikalen Achse 19 senkrecht zur Zeichenebene in Pfeilrichtung 20 drehbar gelagert und um 180° voneinander beabstandet. Die Greifer 17, 18 können zudem in vertikaler Richtung, d. h. senkrecht zur Zeichenebene bewegt werden.

In Fig. 1 ist der Greifer 17 in die Umverpackung 12 abgesenkt und steht bereit, die nächste Zeile 14 von Batteriezellen 13 seitlich zu ergreifen. Der Greifer 18 hat die Zeile 14' auf dem Zielträger 15 abgesetzt. Im nächsten Schritt werden beide Greifer 17, 18 angehoben und in Pfeilrichtung 20 um 180° verschwenkt. Der Greifer 17 kann dann seine aufgenommene Zeile 14 von Batteriezellen 13 auf dem Zielträger 15 absetzen, der sich dazu während der Drehbewegung der Greifer 17, 18 um einen Zeilenabstand in Pfeilrichtung 21 horizontal nach rechts bewegt hat. Auch der Träger 11 mit der Umverpackung 12 wurde während der Drehbewegung der Greifer 17, 18 um einen Zeilenabstand in der Umverpackung 12 in Pfeilrichtung 21 horizontal nach rechts bewegt, damit der Greifer 18 zur Aufnahme der nächsten Zeile 14 von Batteriezellen 13 neben diese Zeile 14 in die Umverpackung 12 abgesenkt werden kann.

Durch fortgesetzte Dreh- und Hubbewegungen der Greifer 17, 18 und taktweises Weiterbewegen der Träger 11, 15 in Pfeilrichtungen 21, 22 können die Zeilen 14 von Batteriezellen 13 sukzessive aus der Umverpackung 12 entnommen und auf dem Zielträger 15 abgesetzt werden. Dabei lässt sich der gegenseitige Abstand der Zeilen 14' auf dem Zielträger 15 gegenüber dem gegenseitigen Abstand der Zeilen 14 in der Umverpackung leicht ändern, indem der Zielträger um eine andere Wegstrecke in Pfeilrichtung 21 bewegt wird als der Träger 11 mit der Umverpackung 12. Außerdem ist auch die Achse 19 mit den Greifern 17, 18 in einer Linearführung 23 gelagert, sodass auch durch lineare Bewegungen der Greifer 17, 18 der Zeilenabstand auf dem Zielträger 15 verändert werden kann.

Auch der gegenseitige Abstand der Batteriezellen innerhalb einer Zeile 14' kann im Vergleich zum Zeilenabstand in einer Zeile 14 der Umverpackung 12 verändert werden, indem der gegenseitige Abstand der Greifelemente 24, 24' der Greifer 17, 18 während der Drehbewegung der Greifer 17, 18 zwischen der Umverpackung 12 und dem Zielträger 15 verändert wird. Im dargestellten Beispiel haben die Greifelemente 24' des Greifers 18 einen geringeren gegenseitigen Abstand als die Greifelemente 24 des Greifers 17.

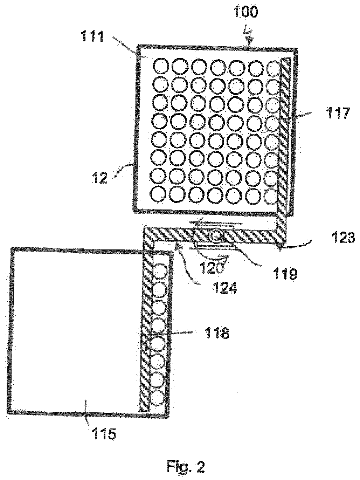

Fig. 2 zeigt eine zweite Ausführungsform einer erfindungsgemäßen Vorrichtung 100. Diese weist wieder einen Träger 111 für eine Umverpackung 12 auf, wobei die Batteriezellen in der Umverpackung 12 aus Übersichtlichkeitsgründen nicht dargestellt sind. Zur Aufnahme der aus der Umverpackung entnommenen Batteriezellen ist ein Zielträger 115 vorgesehen, der hier ebenfalls ohne Aufnahmen für die Zellen dargestellt ist. Zum zeilenweisen Entnehmen der Zellen und Absetzen auf dem Zielträger 115 weist auch die Vorrichtung 100 zwei schwertförmige Greifer 117, 118 auf, die um 180° an einer gemeinsamen vertikalen Achse 119 drehbar gelagert sind. Im Gegensatz zu den Greifern 17, 18 weisen die Greifer 117, 118 jedoch L-förmige Befestigungsabschnitte 123, 124 auf, mit denen sie an der Drehachse 119 befestigt sind. Dies ermöglicht ein Verlagern der Drehachse 119 auf eine Mittelachse M der Träger 111, 115 in deren in Fig. 2 gezeigten Ausgangspositionen zu Beginn des Entladevorgangs. Durch diese Verlagerung der Drehachse 119 und die abgewinkelten Befestigungsabschnitte 123, 124 der Greifer 117, 118 ergeben sich geringere, auf die von den Greifern 117, 118 aufgenommenen Batteriezellen als bei der Vorrichtung 10 aus Fig. 1. Somit sind bei der Vorrichtung 100 auch höhere Drehgeschwindigkeiten der Greifer 117, 118 möglich.

Sowohl bei der Vorrichtung 10 aus Fig. 1 als auch bei der Vorrichtung 100 aus Fig. 2 könnten auch dritte und vierte Greifer vorgesehen werden, die um 90° versetzt zu den gezeigten Greifern 17, 18; 117, 118 angeordnet sind. Die Zielträger 15, 115 müssten dann um 90° gedreht und senkrecht zu den Trägern 11, 111 bewegt werden, um ein sukzessives Entladen durch alle vier Greifer zu ermöglichen, die sukzessive jeweils um 90° weitergedreht werden.

## Patentansprüche

1. Verfahren zum Entnehmen von Batteriezellen (13) aus einer rechteckigen Umverpackung (12) und Ablegen auf einem Zielträger (15, 115), **gekennzeichnet durch** die Schritte:
a. Einführen eines Greifers (17, 117) mit je einem Greifelement pro Zelle (13) zwischen die erste Zeile (14) von Batteriezellen (13) und die Wand der Umverpackung (12) oder zwischen zwei Zeilen (14) von Batteriezellen (13);
b. seitliches Ergreifen der Batteriezellen (13) mit den Greifelementen;
c. Anheben des Greifers (17, 117) mit den Batteriezellen (13) über die Umverpackung (12) und Drehen des Greifers (17, 117) um eine vertikale Achse (19, 119) um mindestens 90° oder Durchführen einer translatorischen Bewegung mit dem Greifer (17, 117);
d. Absenken des Greifers (17, 117) und Absetzen der Zeile (14) von Batteriezellen (13) auf dem Zielträger (15, 115);
e. Einführen eines weiteren Greifers (18, 118) mit je einem Greifelement je Batteriezelle (13) in die Umverpackung (12) neben der nächsten Zeile (14) von Batteriezellen (13);
f. seitliches Ergreifen der Batteriezellen (13) mit den Greifelementen;
g. Anheben des weiteren Greifers (18, 118) mit den Batteriezellen (13) über die Umverpackung (12) und Drehen des Greifers (18, 118) um eine vertikale Achse (19, 119) um mindestens 90° oder Durchführen einer translatorischen Bewegung mit dem Greifer (18, 118), während der erste Greifer (17, 117) angehoben und um die vertikale Achse (19, 119) vom Zielträger (15, 115) weggeschwenkt oder **durch** eine translatorische Bewegung von diesem wegbewegt wird;
h. Absenken des weiteren Greifers (18, 118) und Absetzen der Zeile (14) von Batteriezellen (13) auf dem Zielträger (15, 115) im gewünschten Abstand zur ersten Zeile (14');
i. Wiederholung der Schritte e. bis h. im Wechsel **durch** die zwei Greifer (17, 18; 117, 118), bis alle oder die gewünschte Anzahl von Zeilen (14) von Batteriezellen (13) aus der Umverpackung (12) entnommen und auf dem Zielträger (15, 115) abgesetzt wurden.

2. Verfahren nach Anspruch 1, **dadurch gekennzeichnet, dass** die Greifer (17, 18; 117, 118) um dieselbe vertikale Achse (19, 119) verschwenkt werden.

3. Verfahren nach Anspruch 1 oder 2, **dadurch gekennzeichnet, dass** der gegenseitige Abstand der Zeilen (14') von Batteriezellen (13) auf dem Zielträger (15, 115) durch eine horizontale Translationsbewegung des Zielträgers (15, 115) senkrecht zur Batteriezeilenlängsrichtung eingestellt wird.

4. Verfahren nach einem der vorhergehenden Ansprüche, **dadurch gekennzeichnet, dass** zur Durchführung des Verfahrens zwei Greifer (17, 18; 117, 118) eingesetzt werden, die an einer gemeinsamen vertikalen Achse (19, 119) um 180° voneinander beabstandet angeordnet und gemeinsam um diese Achse (19, 119) drehbar und unabhängig voneinander in vertikaler Richtung verschiebbar sind und die die Schritte e. bis h. im Wechsel durchführen, wobei sie in den Schritten g. jeweils um 180° um die vertikale Achse gedreht werden.

5. Verfahren nach Anspruch 1 bis 3, **dadurch gekennzeichnet, dass** zur Durchführung des Verfahrens vier Greifer eingesetzt werden, die an einer gemeinsamen vertikalen Achse um 90° voneinander beabstandet angeordnet und gemeinsam um diese Achse schwenkbar und unabhängig voneinander in vertikaler Richtung verschiebbar sind und die die Schritte e. bis h. im Wechsel durchführen, wobei sie in Schritt g. jeweils um 90° um die vertikale Achse gedreht werden.

6. Verfahren nach einem der vorhergehenden Ansprüche, **dadurch gekennzeichnet, dass** in Schritt g. außerdem der gegenseitige Abstand der die Batteriezellen (13) haltenden Greifelemente des Greifers (17, 18; 117, 118) verändert wird.

7. Vorrichtung zur Durchführung des Verfahrens nach einem der Ansprüche 1 bis 6, **dadurch gekennzeichnet, dass** sie zwei um 180° voneinander beabstandet oder vier um 90° voneinander beabstandet an einer gemeinsamen vertikalen Drehachse (19, 119) angeordnete, schwertförmige Greifer (17, 18; 117, 118) aufweist, die mit einer Vielzahl von Greifelementen zum seitlichen Ergreifen von Batteriezellen (13) bestückt sind und die in vertikaler Richtung unabhängig voneinander bewegbar sind.

8. Vorrichtung nach Anspruch 7, **dadurch gekennzeichnet, dass** sie eine Antriebsvorrichtung für einen Zielträger (15, 115) zur Aufnahme der Batteriezellen (13) aufweist, wobei mit Hilfe der Antriebsvorrichtung der Zielträger (15, 115) horizontal und senkrecht zur Ausrichtung der Zeilen (14') von Batteriezellen (13) auf dem Zielträger (15, 115) verschiebbar ist.

9. Vorrichtung nach Anspruch 7 oder 8, **dadurch gekennzeichnet, dass** sie eine Antriebsvorrichtung für eine Umverpackung (12) von Batteriezellen (13) aufweist, wobei mit Hilfe der Antriebsvorrichtung die Umverpackung (12) horizontal und senkrecht zur Ausrichtung der Batteriezeilen (14) in der Umverpackung (12) verschiebbar ist.

10. Vorrichtung nach einem der Ansprüche 7 bis 9, **dadurch gekennzeichnet, dass** die Greifelemente in ihrem gegenseitigen Abstand verstellbar an den Greifern (17, 18; 117, 118) angeordnet sind.

11. Vorrichtung nach Anspruch 10, **dadurch gekennzeichnet, dass** der gegenseitige Abstand der Greifelemente über eine Kulissenführung oder über Steuerkurven während der Schwenkbewegung der Greifer (17, 18; 117, 118) um die Drehachse (19, 119) und/oder während der Vertikalbewegung der Greifer (17, 18; 117, 118) verstellbar ist.

12. Vorrichtung nach Anspruch 10, **dadurch gekennzeichnet, dass** zwischen den Greifelementen elastische Elemente angeordnet sind, die beim Ergreifen der Batteriezellen (13) entsprechend des gegenseitigen Abstands der Zellen (13) in der Umverpackung (12) vorgespannt sind und deren Federkonstante derart bemessen ist, dass sich nach Freigabe der Vorspannung nach dem Ergreifen der Batteriezellen (13) der gewünschte gegenseitige Abstand der Batteriezellen (13) auf dem Zielträger (15, 115) ergibt.

13. Vorrichtung nach einem der Ansprüche 7 bis 12, **dadurch gekennzeichnet, dass** die Greifelemente Saugeinrichtungen aufweisen und/oder magnetisch wirkend sind.

14. Vorrichtung nach einem der Ansprüche 7 bis 13, **dadurch gekennzeichnet, dass** jedes Greifelement einzeln ansteuerbar ist.
